# EUROPEAN PATENT SPECIFICATION

(11) **EP 4 019 688 B1**
(45) Date of publication and mention of the grant of the patent: **19.06.2024**
(21) Application number: 20853722.5
(22) Date of filing: 17.08.2020
(51) Int. Cl.: D06F 37/10, D06F 37/28, F16J 15/10, D06F 39/14

(54) **WASHING MACHINE**
WASCHMASCHINE
MACHINE À LAVER

(30) Priority: 20.08.2019 CN 201910767605
(43) Date of publication of application: 29.06.2022
(73) Proprietor: QINGDAO HAIER LAUNDRY ELECTRIC APPLIANCES CO., LTD., Qingdao, Shandong 266101 (CN); HAIER SMART HOME CO., LTD., Laoshan District Qingdao Shandong 266101 (CN)
(72) Inventor: ZHAO, Zhiqiang, Qingdao, Shandong 266101 (CN); XU, Sheng, Qingdao, Shandong 266101 (CN); LV, Peishi, Qingdao, Shandong 266101 (CN)
(74) Representative: Beck & Rössig European Patent Attorneys
(86) International application number: PCT/CN2020/109440
(87) International publication number: WO 2021/032037

(56) References cited:
- EP-A2- 1 762 650
- WO-A1-2018/205933
- CN-A- 1 475 621
- CN-A- 108 866 922
- CN-B- 106 436 135
- CN-U- 206 273 863
- CN-U- 206 521 635
- CN-U- 206 521 635
- CN-U- 208 279 896
- CN-U- 208 869 842
- KR-B1- 100 617 224

## Description

### TECHNICAL FIELD

The present disclosure relates to the technical field of laundry equipment, in particular to a washing machine comprising the features of the preamble portion of claim 1.

### BACKGROUND

As a most widely used household appliance in people's daily life, a washing machine helps people get rid of the trouble of washing clothes and brings great convenience to people. However, an existing washing machine as e.g. disclosed in KR 20010049032 A generally includes an inner drum and an outer drum, and multiple dewatering holes are formed in the wall of the inner drum. During the washing process, washing water existing between the inner drum and the outer drum cannot be used, thus causing waste of this part of washing water, and dirt generated during the washing process will be accumulated as the water flows between the inner drum and the outer drum. With long-term use, the accumulation of the dirt will affect the washing effect and reduce the user experience.

In order to avoid such problems, drum washing machines with a holeless inner drum as indicated in the preamble portion of claim 1 have been developed and are generally known. In this type of washing machines an inner drum door capable of being opened/closed is mounted on an opening of the holeless inner drum, so that an inner cavity capable of independently containing washing water is formed, in this way, in the washing and rinsing process, the washing water is contained in the inner drum, no water exists between the inner drum and an outer drum, and therefore, the problem of dirt between the inner drum and the outer drum is solved, and meanwhile washing water is saved.

While in washing machines of the type KR 20010049032 A the door remains stationary, in drum washing machines with a holeless inner drum the door sealing the inner drum spins together with the inner drum.

KR 100 617 224 B1 describes a drum washing machine which includes a body that forms a laundry input, port; an outer door which opens the laundry input port by rotating on the body; an outer tub with an open unit; an inner door that opens the open unit by rotating on the outer tub; and a seal that closes both the outer tub and the inner door. This seal ensures that washing water in the outer tub does not discharge outside when the open unit of the outer tub is closed by the inner door.

It can be known from the structural characteristics of the drum washing machine with the holeless inner drum that in the washing and rinsing process, the key of forming the inner cavity of the inner drum capable of independently containing washing water is to maintain the sealing performance of the inner drum door, and in the process of the high-speed rotation of the inner drum for dewatering, it needs to be guaranteed that the inner drum door is locked, and thus serious safety accidents are avoided.

Therefore, the disclosure aims to solve the sealing problem of the holeless inner drum and form an internal cavity for independently containing washing water.

### SUMMARY

In order to solve the above problems, a purpose of the present disclosure is to provide a washing machine comprising the features of claim 1. Advantageous embodiments are indicated in further claims.

According to the front-opening drum washing machine with the inner drum of the present disclosure, the inner drum door is arranged on the inner drum, washing in a closed space of the inner drum is achieved, the possibilities that clothes in the inner drum come out, the clothes flow out from the inner drum due to compression and beating or water is splashed out, and the dirt is attached between the inner drum and the outer drum are avoided, and no water exists between the drums.

### BRIEF DESCRIPTION OF THE DRAWINGS

Fig. 1 is a schematic structural diagram of a washing machine in an embodiment of the present disclosure;
Fig. 2 is an exploded view of an inner drum door of a washing machine in Embodiment 1 of the present disclosure;
Fig. 3 is another exploded view of the inner drum door of the washing machine in Embodiment 1 of the present disclosure;
Fig. 4 is a front view of the inner drum door of the washing machine in Embodiment 1 of the present disclosure;
Fig. 5 is a section view of the washing machine in Embodiment 1 of the present disclosure along a plane A-A in Fig. 4;
Fig. 6 is a partial enlarged view I of the washing machine in Embodiment 1 of the present disclosure;
Fig. 7 is a partial enlarged view II of the washing machine in Embodiment 1 of the present disclosure;
Fig. 8 is a partial enlarged view III of the washing machine in Embodiment 1 of the present disclosure;
Fig. 9 is a schematic structural diagram of a washing machine in Embodiment 2 of the present disclosure;
Fig. 10 is a top view of an inner drum of the washing machine in Embodiment 2 of the present disclosure;
Fig. 11 is an exploded view of installation of an inner drum door of the washing machine in Embodiment 2 of the present disclosure;
Fig. 12 is a schematic structural diagram of installation the inner drum door of the washing machine in Embodiment 2 of the present disclosure;
Fig. 13 is an assembly diagram of a handle and a latch tongue of the washing machine in Embodiment 2 of the present disclosure;
Fig. 14 is a schematic diagram of a three-dimensional structure of a lock bracket of the washing machine in embodiment 2 of the present disclosure;
Fig. 15 is a schematic diagram of a three-dimensional structure of the latch tongue of the washing machine in embodiment 2 of the present disclosure;
Fig. 16 is a schematic structural diagram of a washing machine in Embodiment 3 of the present disclosure;
Fig. 17 is a partial enlarged view of Fig. 16 of the washing machine in Embodiment 3 of the present disclosure;
Fig. 18 is a schematic structural diagram of an electromagnetic heating device of the washing machine in Embodiment 3 of the present disclosure;
Fig. 19 is a schematic structural diagram of a washing machine in Embodiment 4 of the present disclosure;
Fig. 20 is a section view I of the washing machine in Embodiment 4 of the present disclosure along a plane C-C in Fig. 19;
Fig. 21 is a section view II of the washing machine in Embodiment 4 of the present disclosure along a plane C-C in Fig. 19;
Fig. 22 is a section view of an assembly diagram of an outer drum, an inner drum and an inner drum door of a washing machine in Embodiment 5 of the present disclosure;
Fig. 23 is a partial enlarged view of Fig. 22 of the washing machine in Embodiment 5 of the present disclosure (an inner drum door is locked in place); and
Fig. 24 is a partial enlarged view of Fig. 22 of the washing machine in Embodiment 5 of the present disclosure (the inner drum door is not locked in place/not locked).

### DETAILED DESCRIPTION

A washing machine of the present disclosure is described in detail below with reference to the accompanying drawings.

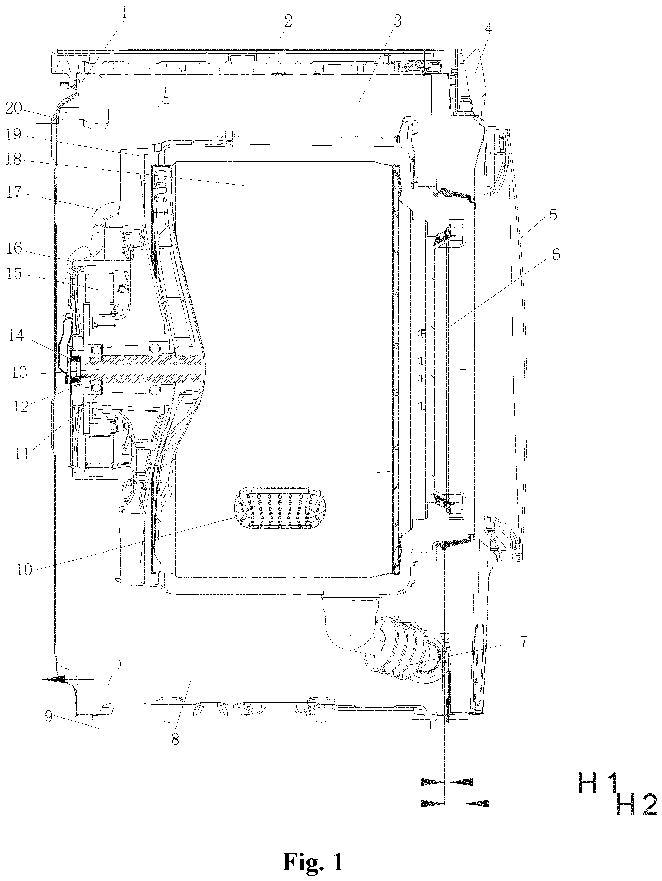

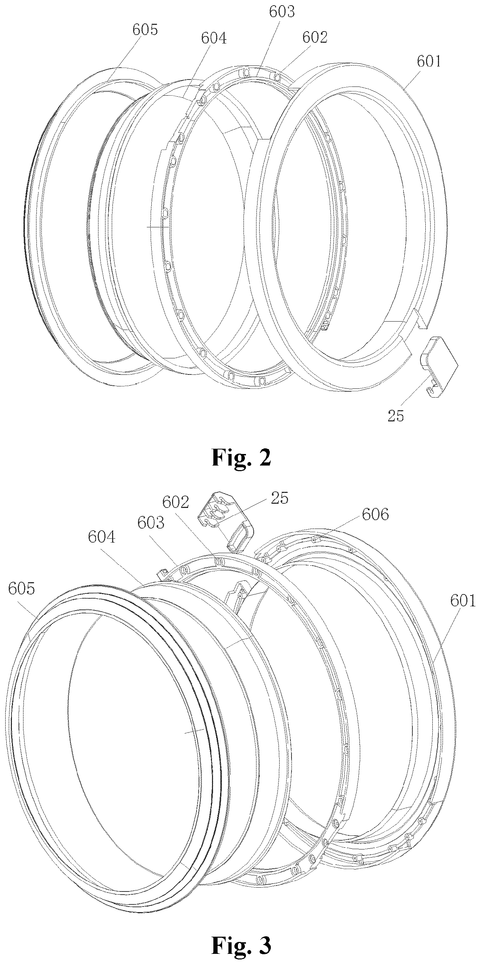

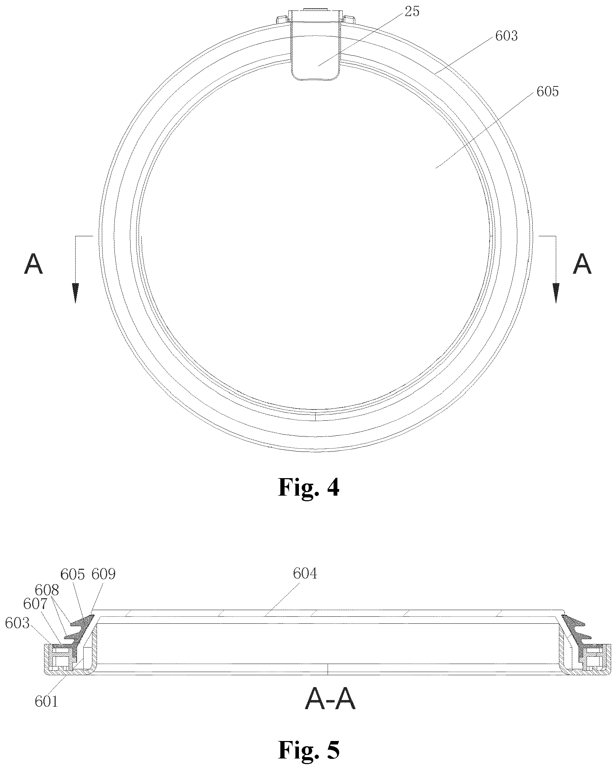

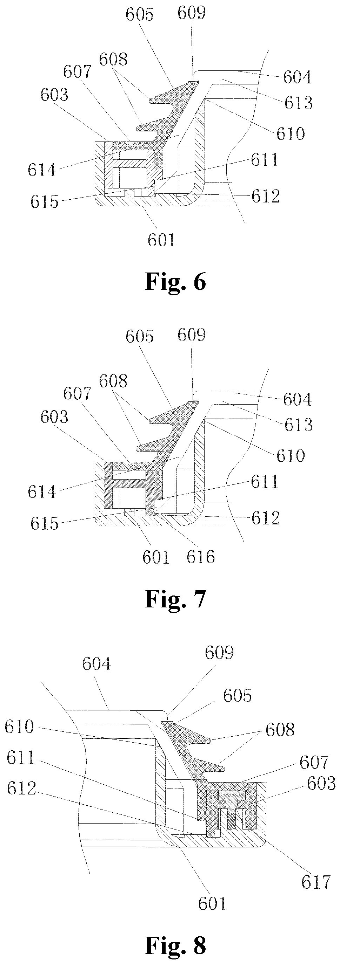

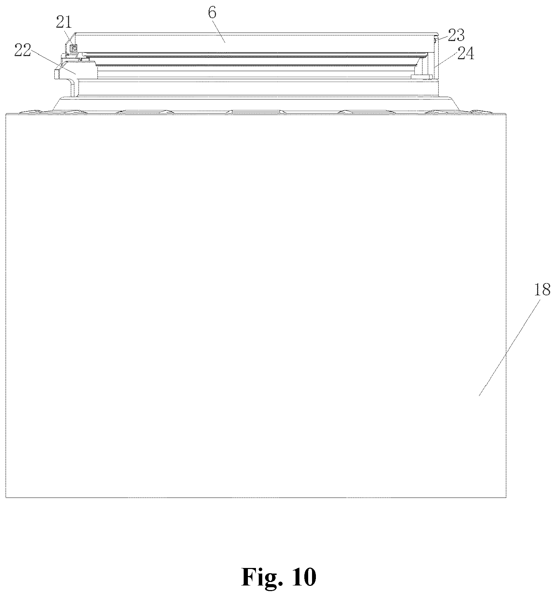

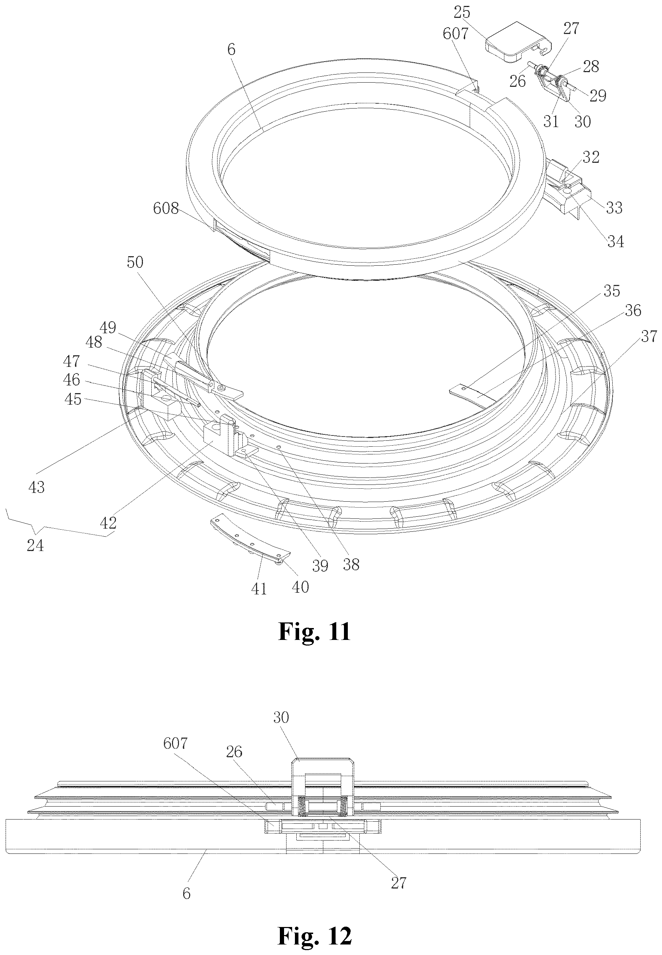

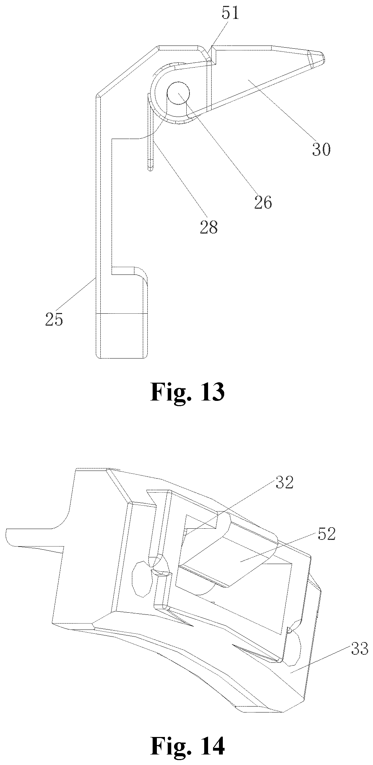

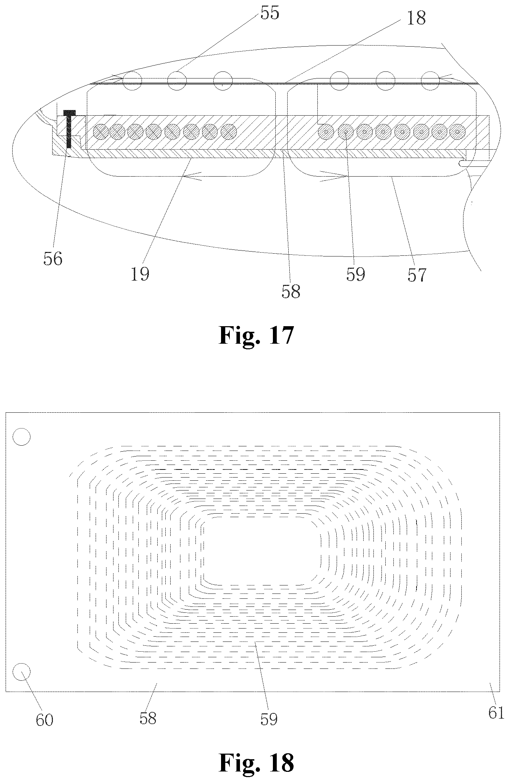

As shown in Fig. 1-Fig. 24, an embodiment provides a drum washing machine with a holeless inner drum and a front-opening structure. The structure is simple, and washing/rinsing water does not need to be filled between an inner drum and an outer drum, so that the washing water consumption of the washing machine is greatly reduced. The possibility of dirt adhesion between the inner drum and the outer drum is avoided. The user health and the user experience are greatly improved, and water resources are greatly saved.

The drum washing machine of the embodiment is provided with a housing 1, and the housing 1 includes an upper deck plate 2, a front panel, a rear panel and a bottom plate. Bottom legs 9 are fixedly mounted on the bottom plate and used for supporting the whole washing machine. An outer drum 19 is arranged in the housing 1, and an inner drum 18 is coaxially arranged in the outer drum 19. The outer drum 19 is mainly used for collecting drained water of the inner drum 18 and drained water caused by high-speed centrifugal dewatering of the inner drum 18. The inner drum 18 rotates, and preferably, lifting ribs 10 are arranged to continuously lift clothes, make the clothes drop off and beat the clothes, so that the clothes are cleaned conveniently. The inner drum 18 is of a holeless structure, the outer drum 19 is provided with a central mounting hole where a bearing 11 is mounted and fixed. An inner drum shaft 12 which is fixedly connected with the inner drum 18 penetrates through the bearing 11 and is connected with a driving motor 15. An openable/closeable inner drum door 6 is mounted on a front opening of the inner drum 18, and therefore the inner drum 18 is of a sealed cabin structure.

In order to introduce water into the holeless inner drum of the embodiment, the driving motor 15 of the drum washing machine in the embodiment is in transmission connection with the inner drum 18 through the inner drum shaft 12 to drive the inner drum 18 to rotate, a hollow channel communicating with an interior of the inner drum 18 is formed in the inner drum shaft 12, and a water inflow pipeline 17 communicates with the hollow channel of the inner drum shaft 12.

In the embodiment, the inner drum 18 is provided with a pressure balancing mechanism used for communicating the inner drum 18 with the external environment so as to balance the pressure in the inner drum.

When water inflows, air in a sealed cabin of the inner drum is compressed and can overflow through the pressure balancing mechanism, and thus pressure balance is guaranteed.

When water is suddenly cut off, external air can quickly enter the sealed cabin of the inner drum and destroy suck-back, pressure balance is guaranteed, and washing water is prevented from being sucked into a tap water pipeline.

During dewatering for example, the pressure balancing mechanism can also ensure the pressure balance of the inner drum.

As an implementation mode of the embodiment, the pressure balancing mechanism includes a pressure equalizing hole channel arranged on the inner drum 18, and one end, communicating with the interior of the inner drum 18, of the pressure equalizing hole channel is arranged at the position, close to a rotating central shaft, of the inner drum 18 and is always higher than the highest water level in the inner drum 18.

Specifically, the pressure equalizing hole channel is formed in the inner drum shaft 12 to communicate the interior of the inner drum 18 with the external environment, and the highest water level in the inner drum 18 is lower than the inner drum shaft 12. Therefore, water in the inner drum 18 can be prevented from flowing out of the pressure equalizing hole channel.

In the embodiment, the pressure equalizing hole channel includes a first hole channel section and a second hole channel section, the first hole channel section is parallel to the hollow channel, one end of the first hole channel section communicates with the interior of the inner drum, one end of the second hole channel section communicates with the first hole channel section, and the other end of the second hole channel section extends to a peripheral wall of the inner drum shaft to communicate with the interior of the outer drum. Preferably, the second hole channel section is perpendicular to the first hole channel section to form an L-shaped pressure equalizing hole channel.

According to the front-opening drum washing machine with the inner drum in the embodiment, the inner drum door is arranged on the inner drum, washing in a closed space of the inner drum is achieved, the possibilities that the clothes in the inner drum come out, the clothes flow out from the inner drum due to compression and beating or water is splashed out, and the dirt is attached between the inner drum and the outer drum are avoided, and no water exists between the drums.

In the embodiment, the washing machine is provided with a door lock detection device for detecting whether an inner drum door lock is locked in place, which ensures that the inner drum door is locked in place, and achieves 100% of locking judgment accuracy. Due to the fact that the dewatering rotating speed of the drum can reach 1600 revolutions per minute, if the inner drum door on the inner drum is not locked well, safety accidents can happen. The safety of the washing machine, the user health and the user experience are greatly improved.

As shown in Fig. 1-Fig. 8, a washing machine according to the invention includes:
an inner drum 18, provided with a washing cavity for independently containing washing water;
an inner drum door 6, mounted at an opening of the inner drum 18 in an openable and closable mode;
the inner drum door 6 including a door body inner shell 603, a door body outer shell 601 and a door body lining 604; and
the door body lining 604 being clamped and fixed between the door body inner shell 603 and the door body outer shell 601.

According to the embodiment, the inner drum 18 is sealed by mounting the openable and closeable inner drum door 6 at the opening of the inner drum 18 to form the washing cavity for containing washing water.

As an implementation mode of the embodiment, in the embodiment, the door body lining 604 includes a blocking part that is matched with the opening of the inner drum 18 in shape, and a connecting part 615 that is located at the periphery of the blocking part, and the connecting part 615 is clamped and fixed between the door body inner shell 603 and the door body outer shell 601.

Further, the blocking part includes a blocking face 613 and a transition wall 614 that extends from the periphery of the blocking face 613 in an axial direction of the inner drum 18, and the connecting part 615 is an annular connecting wall formed by outward flanging of the periphery of the transition wall 614.

In order to achieve fixed mounting of the door body lining 604, in the embodiment, the door body inner shell 603 includes an annular inner shell body, an inner shell connecting part and an inner shell extrusion part 611 that are arranged on the inner shell connecting part; the door body outer shell 601 includes an annular shell body, a shell connecting part and an outer shell extrusion part 612 that are arranged on the outer shell body; the inner shell connecting part and the outer shell connecting part are fixedly connected through a connecting piece, and the connecting part 615 of the door body lining 604 is clamped and fixed by the inner shell extrusion part 611 and the outer shell extrusion part 612.

Further, the door body shell 601 comprises a shell supporting part 610 arranged on the shell body, and the supporting part 610 extends to the blocking part in the axial direction of the inner drum to conduct extrusion supporting.

In the embodiment, the door body lining 604 is extruded and fixed through the inner shell extrusion part 611 and the outer shell extrusion part 612, and meanwhile, the door body lining 604 is supported through the supporting part 610, so that the stability of the door body lining 604 is guaranteed.

Preferably, the supporting part 610 extends to the blocking 613 and/or the transition wall 614 in the axial direction of the inner drum to conduct extrusion support.

In the embodiment, the inner drum door 6 further includes a sealing element 605 that is mounted on the periphery of the blocking part, and is used for maintaining the sealing performance of the opening of the inner drum 18 when the inner drum door 6 is closed.

In order to achieve fixed mounting of the sealing element 605, in the embodiment, the outer shell body 601 is provided with an annular groove, a peripheral wall of an inner side of the inner shell body and a peripheral wall of an inner side of the annular groove are spaced, the inner shell extrusion part 611 is an inner shell bulge arranged on the peripheral wall of the inner side of the inner shell body, and the connecting part 615 of the door body lining 604 extends into the annular groove of the outer shell body to be clamped and fixed between the inner shell bulge and a bottom wall of the annular groove.

In the embodiment, the door body lining 604 and the sealing element 605 are fixedly mounted through clamping and fixing of the door body outer shell 601 and the door body inner shell 603, and once assembly of the door body outer shell 601 and the door body inner shell 603 solves the problem about the fixed mounting of the door body lining 604 and the sealing element 605 simultaneously, so that the mounting is easy and convenient, and the efficiency is high.

Preferably, the outer shell extrusion part 612 is an outer shell bulge that is arranged at the position, corresponding to the inner shell bulge, of the bottom wall of the annular groove, and the connecting part 615 of the door body lining 604 extends into the annular groove of the outer shell body to be clamped and fixed between the inner shell bulge and the outer shell bulge.

In the embodiment, the supporting part 610 is a supporting wall formed by extending from the peripheral wall of the inner side of the annular groove to the transition wall in the axial direction of the inner drum.

In the embodiment, a mounting space used for clamping and fixing one end of the sealing element is formed between the peripheral wall of the inner side of the inner shell body and the transition wall 614 of the door body lining 604, the periphery of the blocking face 613 of the door body lining 604 extends outwards in a radial direction to form a stop ring 609, the other end of the sealing element 605 abuts against the stop ring 609, and at least one layer of sealing band 608 is arranged between two ends of the sealing element 605.

In the embodiment, an annular mounting groove is formed in the inner shell body, a mounting hole 602 is formed in the annular mounting groove, and the connecting piece penetrates through the mounting hole 602 to be fixedly connected with the outer shell body; and the sealing element 605 includes a decoration part 607, the decoration part 607 extends above the mounting groove and covers an opening of the mounting groove, and an assembly hole 606 corresponding to the mounting hole 602 is formed in the door body outer shell.

In order to further improve the overall assembly stability of the inner drum door 6, barb structures 616 are arranged on the door body inner shell 603 and/or the door body outer shell 601 and/or the door body lining 604, and in an example, the barb structures 616 in the figure are arranged on the door body inner shell 603.

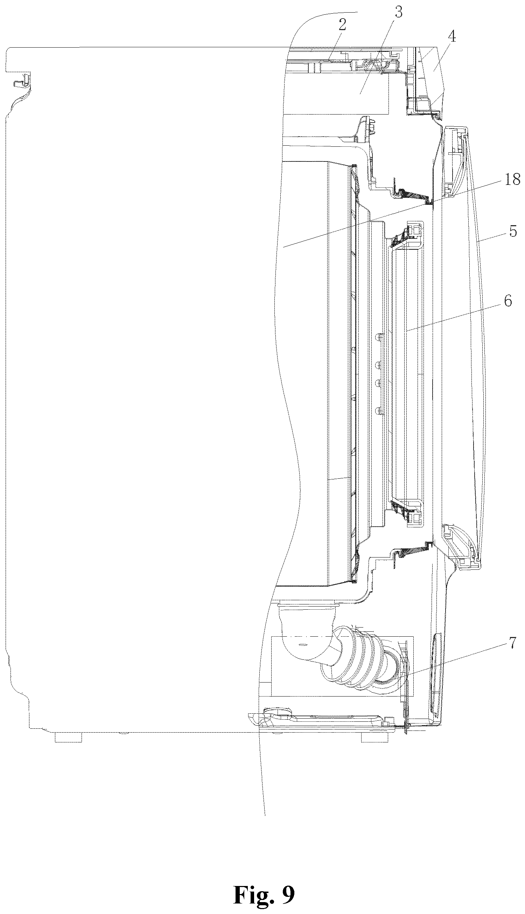

As shown in Fig. 9-Fig. 15, a washing machine in the embodiment includes:
an inner drum 18, provided with a washing cavity for independently containing washing water;
an inner drum door 6, mounted at an opening of the inner drum 18 in an openable and closable mode; and
a rotating shaft structure through which the inner drum door 6 is rotatably mounted on an opening of the inner drum 18.

In the embodiment, the inner drum door 6 is rotatably mounted on the opening of the inner drum 18 through the rotating shaft structure to close and open the inner drum.

Specifically, in the embodiment, the rotating shaft structure includes a rotating shaft seat 24, a rotating shaft 23 and a connecting arm 49, wherein the rotating shaft seat 24 is fixedly mounted on the opening wall of the inner drum 18, the rotating shaft 23 is mounted on the rotating shaft seat 24, the connecting arm 49 is rotatably mounted on the rotating shaft 23, and the connecting arm 49 is fixedly connected with the inner drum door 6.

Further, the rotating shaft seat 24 includes a first rotating shaft seat 42 and a second rotating shaft seat 43 which are respectively fixed on the opening wall of the inner drum 18, and the rotating shaft 23 is fixedly mounted between the first rotating shaft seat 42 and the second rotating shaft seat 43.

Preferably, the rotating shaft 23 is a cylindrical rotating shaft, special-shaped holes 45 are respectively formed in the first rotating shaft seat 42 and the second rotating shaft seat 43, and two ends of the cylindrical rotating shaft are respectively and fixedly mounted in the special-shaped holes 45 of the first rotating shaft seat 42 and the second rotating shaft seat 43.

The rotating shaft 23 includes a cylindrical shaft body 47 and special-shaped rotating shaft parts 46 that are located at two ends of the cylindrical shaft body 47 and matched with the special-shaped holes 45 respectively.

Further, in the embodiment, the rotating shaft structure further includes a rotating shaft seat lining plate 41 and a rotating shaft seat connecting piece, wherein the rotating shaft seat lining plate 41 and the rotating shaft seat 24 are located on two sides of the opening wall of the inner drum 18 respectively; rotating shaft seat lining plate fixing holes 40 are formed in the rotating shaft seat lining plate 41, rotating shaft fixing holes 38 are formed in the opening wall of the inner drum 18, and rotating shaft seat fixing holes 39 are formed in the rotating shaft seat 24; and the rotating shaft seat connecting piece penetrates through the rotating shaft seat lining plate fixing holes 40, the rotating shaft fixing holes 38 and the rotating shaft seat fixing hole 39 to fixedly connect the rotating shaft seat lining plate fixing holes 40, the rotating shaft fixing holes 38 and the rotating shaft seat fixing holes 39. In the embodiment, the rotating shaft seat lining plate 41 plays the role of enhancing the strength of the position of the rotating shaft seat of the inner drum to avoid deformation.

Preferably, sealing elements are arranged between the rotating shaft seat connecting piece and the rotating shaft seat lining plate fixing holes 40, and/or between the rotating shaft seat connecting piece and the rotating shaft fixing holes 38, so as to prevent washing water in the inner drum 18 from leakage from the connecting position, and keep the interior of the inner drum 18 closed.

In the embodiment, the connecting arm 49 includes a shaft hole part 48 and a connecting part 50, wherein the shaft hole part 48 is provided with a shaft hole, the cylindrical shaft body 47 penetrates through the shaft hole 48 and can freely rotate relative to the shaft hole 48, and the connecting part 50 is fixedly connected with the inner drum door 6.

Preferably, the inner drum door 6 is provided with an inner drum door mounting avoidance area 608 corresponding to the connecting arm 49.

Further preferably, the inner drum door mounting avoidance area 608 is arranged on the door body inner shell 603.

It can be known from the structural characteristics of the drum washing machine with the holeless inner drum that in the washing and rinsing process, the key of forming the inner cavity of the inner drum capable of independently containing washing water is to maintain the sealing performance of the inner drum door. Furthermore, in the process of the high-speed rotation of the inner drum for dewatering, if the inner drum door is not locked or is not locked in place, serious safety accidents may be caused. Therefore, in the embodiment, the washing machine further includes an inner drum door lock, wherein the inner drum door lock includes a lock bracket assembly 22 and a latch tongue assembly 21, the lock bracket assembly 22 is fixed on the opening wall of the inner drum 18, the latch tongue assembly 21 is fixed on the inner drum door 6, and the latch tongue assembly 21 and the lock bracket assembly 22 are matched in a locking mode to lock the inner drum door.

Furthermore, the lock bracket assembly 22 includes a bracket body 33, a lock hook 32, a lock bracket lining plate 36 and a lock bracket connecting piece, wherein the lock hook 32 is arranged on the bracket body 33, and the lock bracket lining plate 36 and the bracket body 33 are located on the two sides of the opening wall of the inner drum 18 respectively. A lock bracket lining plate fixing hole 35 is formed in the lock bracket lining plate 36, a lock bracket fixing hole is formed in the opening wall of the inner drum 18, and a lock bracket fixing hole 34 is formed in the bracket body 33; the lock bracket connecting piece penetrates through the lock bracket lining plate fixing hole 35, the lock bracket fixing hole and the lock bracket fixing hole 34 to fixedly connect the lock bracket lining plate fixing hole 35, the lock bracket fixing hole and the lock bracket fixing hole 34.

Preferably, sealing elements are arranged between the lock bracket connecting piece and the lock bracket lining plate fixing hole 35, and/or between the lock bracket connecting piece and the lock bracket fixing hole respectively.

Further, in the embodiment, the latch tongue assembly 21 includes a latch tongue 30, a latch tongue rotating shaft 29 and a handle 25, wherein the latch tongue rotating shaft 29 is fixedly mounted on the inner drum door 18, the latch tongue 30 and the handle 25 are rotatably mounted on the latch tongue rotating shaft 29, and the handle 25 and the latch tongue 30 are matched to drive the latch tongue 30 to rotate so as to lock/unlock the inner drum door.

Further, in the embodiment, the latch tongue assembly 21 further includes a torsion spring 28, the latch tongue rotating shaft 29 is sleeved with the torsion spring 28, one end of the torsion spring 28 is fixedly connected with the inner drum door 6, and the other end of the torsion spring 28 is fixedly connected with the latch tongue 30.

Preferably, the inner drum door 6 is provided with a torsion spring fixing hole or a torsion spring fixing groove used for assembling the torsion spring 28, and the latch tongue 30 is provided with a torsion spring fixing hole or a torsion spring fixing groove used for assembling the torsion spring 28.

In the embodiment, the torsion spring 28 includes a torsion spring inner drum door fixing part 27 connected with the inner drum door 6, and a torsion spring lock tongue fixing part 31 connected with the lock tongue 30.

As an implementation mode of the embodiment, the inner drum door 6 is provided with a mounting area 607 used for mounting the latch tongue assembly.

Preferably, the inner drum door 6 includes a door body inner shell 603, a door body outer shell 601 and a door body lining 604, wherein the door body lining 604 is clamped and fixed between the door body inner shell 603 and the door body outer shell 601, and the mounting area 607 is arranged on the door body outer shell 601.

Preferably, the installation area 607 is a mounting groove formed in the door body outer shell 601.

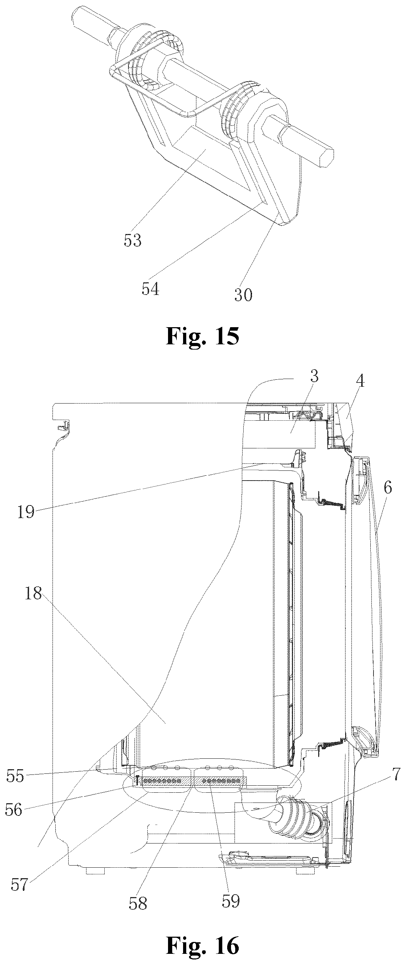

As shown in Fig. 16-Fig. 18, in the embodiment, a washing machine includes:
an inner drum 18, provided with a washing cavity for independently containing washing water;
an outer drum 19, arranged outside the inner drum 18 in a sleeving manner; and
an electromagnetic heating device, arranged on a side wall of the outer drum 19 and corresponding to a side wall, to be heated, of the inner drum 18.

The embodiment provides the washing machine which is provided with the electromagnetic heating device that heats the side wall of the inner drum 18, the side wall of the inner drum 18 is heated by the electromagnetic heating device, and then heat is transferred to washing water in the inner drum 18, thereby heating the washing water.

Electromagnetic heating is also known as electromagnetic induction heating, namely an electromagnetic heating (EH for short) technology. The principle of electromagnetic heating is that an alternating magnetic field is generated through an electronic circuit board component, when an irony container is placed on the electromagnetic heating device, alternating magnetic lines are cut by the surface of the container, and alternating current (namely eddy current) is generated on a metal part at the bottom of the container, the eddy current enables carriers at the bottom of the container to move irregularly at a high speed, and the carriers and atoms are subjected to collision and friction mutually to generate heat energy. Therefore, the effect of heating articles is achieved. As the irony container emits heat, the heat conversion rate is particularly high and can reach 95% at most, and a direct heating mode is adopted. Therefore, in the embodiment, a pulsator washing machine utilizes the electromagnetic heating device to heat washing water, and the heating efficiency is higher.

In addition, due to the fact that electromagnetic heating is a non-contact heating mode, the mounting requirement of the electromagnetic heating device is lower than that of a conventional electric heating wire heating mode which needs to consider the sealing performance, and therefore the washing machine adopting the electromagnetic heating device has a more simplified installation. In addition, in order to mount an electric heating wire, a mounting position and a mounting structure of the electric heating wire need to be specially designed in the outer drum, the electromagnetic heating device in the embodiment can be directly mounted on an inner wall or an outer wall of the outer drum and even mounted in a tank body, the structure of the outer drum is simplified, the volume of the inner drum can be enlarged to a certain degree, and capacity expansion is achieved.

Further, according to a resistance wire heating mode adopted by an existing washing machine, a resistance wire is immersed in water for direct heating, due to the fact that the water environment is complex, scales deposit on the resistance wire along with the increase of time, and the resistance wire is not easy to clean due to the mounting position, so that the heating efficiency is gradually reduced, and even damage is caused. In the embodiment, the electromagnetic heating device is adopted to achieve non-contact heating, so that the above problem can be solved, the service life is greatly prolonged, and long-term high-efficiency heating can be kept.

In conclusion, in the embodiment, the washing machine adopts the electromagnetic heating device to achieve the heating function, the heating efficiency is improved, the mounting of the heating device is simplified, the structure of the outer drum is simplified, and the service life of the heating device is prolonged.

In the embodiment, the inner drum is made of irony materials and can cut alternating magnetic lines generated by the electromagnetic heating device to generate alternating current (namely eddy current 55), the eddy current 55 enables carriers on the side wall of the inner drum to move irregularly at a high speed, and the carriers are subjected to collision and friction mutually to generate heat energy.

Further, in the embodiment, the electromagnetic heating device is arranged on the inner side wall of the outer drum.

Preferably, the electromagnetic heating device is arranged at the lowest position of the inner side wall of the outer drum 19, which has the advantages that water is concentrated at the bottom of the inner drum 18, and washing water in the inner drum 18 is gathered at the bottom no matter how the inner drum 18 rotates, so that heat is immediately transferred to water when the inner drum 18 is heated, thereby achieving the heating safety and high heating efficiency of the inner drum 18.

In addition, the electromagnetic heating device is arranged at the bottom, there is a certain amount of residual water during each drainage, and an electromagnetic coil of the electromagnetic heating device dissipates heat.

As an implementation mode of the embodiment, in the embodiment, the electromagnetic heating device includes an electromagnetic coil 59 and a mounting frame 58, wherein the electromagnetic coil 59 is fixed on the mounting frame 58, and the mounting frame 58 is fixed on the inner side wall of the outer drum 19.

Preferably, the mounting frame 58 includes a mounting shell made of a non-metal material, and the electromagnetic coil 59 is packaged in the mounting shell.

Further, the mounting frame 58 includes a fixing part, an assembling part matched with the fixing part is arranged on the inner side wall of the outer drum 19, and the fixing part is fixedly connected with the assembling part through a connecting piece 56.

Specifically, a mounting groove is formed in the inner side wall of the outer drum 19, the mounting frame 58 is installed in the mounting groove, and the mounting frame 58 is provided with a transition curved surface which is in transition connection with the inner side wall of the outer drum 19. Therefore, the accumulation of dirt at the mounting groove is avoided.

As another implementation mode of the embodiment, the electromagnetic heating device includes an electromagnetic coil, a mounting groove is formed in the inner side wall of the outer drum, the electromagnetic coil is arranged in the mounting groove, and a sealing plate made of non-metal materials is mounted on an opening of the mounting groove in a sealing mode.

A coil distance refers to a distance H between a surface of the wound electromagnetic coil and a surface of the inner drum, and in order to achieve high heating efficiency, the distance cannot be too long or too short. Specifically, the distance between the upper surface of the electromagnetic coil and the surface of the outer side wall of the inner drum is H, and the H satisfies 0.4 cm≤H≤10 cm;
preferably, the H is 1 cm~3 cm; and
further preferably, the H is 2±0.5 cm.

Further, in the embodiment, the electromagnetic heating device includes a heat dissipation piece used for dissipating heat of the electromagnetic coil, so that the better heat dissipation of the wound coil is achieved.

Preferably, the heat dissipation piece is arranged on the mounting frame or the sealing plate.

The embodiment of the present disclosure also provides a control method of a washing machine. In the washing and/or rinsing process of the washing machine, an electromagnetic heating device is controlled to be started, and meanwhile, an inner drum is controlled to rotate to heat washing water.

Further, in the embodiment, the washing machine includes a temperature detection device used for detecting the temperature of the washing water, and when the temperature detection device detects that the temperature of washing water reaches a set temperature, the electromagnetic heating device is controlled to stop working;
or, the washing machine detects a water inflow amount Q and an inflowing water initial temperature t0. A target heating temperature t set by a user is received by the washing machine, heating time T of the washing machine is calculated, and the electromagnetic heating device is controlled to stop working when the working time of the electromagnetic heating device reaches the heating time T.

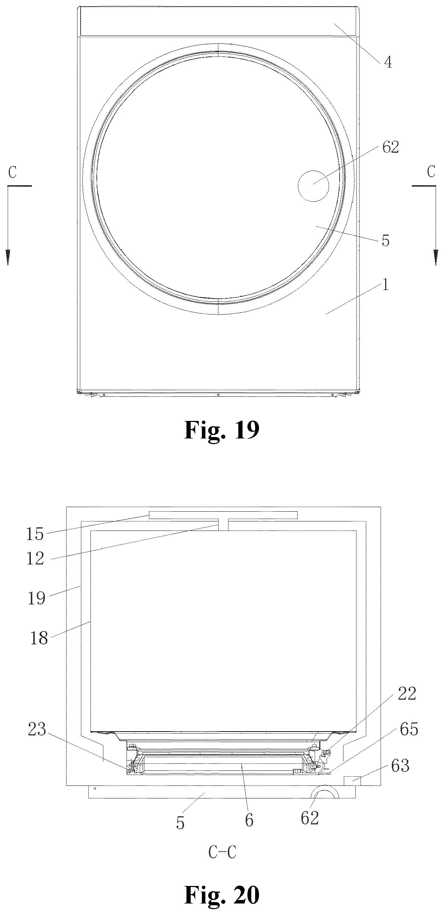

As shown in Figs. 19-21, in the embodiment, a washing machine includes:
an inner drum 18, provided with a washing cavity for independently containing washing water;
an inner drum door 6, mounted at an opening of the inner drum 18 in an openable and closable mode;
a housing 1, provided with a feeding opening corresponding to the opening of the inner drum 18;
a housing door 5, mounted on the feeding opening of the housing 1 in an openable and closable mode; and
a door opening mechanism 62, being triggered to act to realize linkage opening and closing of the inner drum door 6 and the housing door 5.

In the embodiment, the linkage opening and closing of the inner drum door 6 and the housing door 5 is achieved through the door opening mechanism 62, the trouble that a user opens and closes the inner drum door 6 and the housing door 5 separately is avoided, the operation of the user is facilitated, and the use experience of the user is improved.

Specifically, the door opening mechanism 62 includes a trigger piece, and the trigger piece has at least two action/position states that correspondingly control the sequential linkage opening and closing of the housing door and the inner drum door.

As an implementation mode of the embodiment, the trigger piece includes a deformation part. Deformation displacement is generated by pressing the deformation part to control the sequential linkage unlocking of the housing door and the inner drum door, and the deformation displacement corresponding to unlocking of the housing door is smaller than the deformation displacement corresponding to unlocking of the inner drum door.

As an implementation mode of the embodiment, the trigger piece includes a moving part. Displacement is generated by controlling the moving part to control the sequential linkage unlocking of the housing door and the inner drum door, and the displacement corresponding to unlocking of the housing door is smaller than the displacement corresponding to unlocking of the inner drum door.

Further, the housing door 5 is provided with a through channel, the trigger piece is arranged in the through channel, and the trigger piece is provided with a deformation part or a moving part. The housing door is provided with a housing door triggering piece for triggering unlocking of the housing door, and the inner drum door is provided with an inner drum door triggering piece for triggering unlocking of the inner drum door; and by pressing the deformation part or the moving part of the trigger piece, the position state is switched in the through channel to trigger the housing door triggering piece and the inner drum door triggering piece to act sequentially.

In the embodiment, an inner drum door lock is arranged on the inner drum door 6, and an inner drum door triggering piece 65 triggers the inner drum door lock to be unlocked; a housing door lock 63 is arranged on the housing door 5, and the housing door triggering piece triggers the housing door lock to be unlocked.

Specifically, the inner drum door lock includes an inner drum door lock bracket and an inner drum door lock tongue, the inner drum door triggering piece is an inner drum door handle in linkage with the inner drum door lock tongue, and the trigger piece triggers the inner drum door handle to act to drive the inner drum door lock tongue to be in linkage for unlocking.

Specifically, the housing door lock includes a housing door lock bracket and a housing door lock tongue, the housing door triggering piece is in linkage with the housing door lock tongue, and the trigger piece triggers the housing door triggering piece to act to drive the housing door lock tongue to be in linkage for unlocking;
or, the housing door lock is an electromagnetic lock, the housing door triggering piece is a trigger switch, and the trigger piece triggers the trigger switch to act to generate a control signal for controlling the electromagnetic lock to be unlocked/locked.

Further, in the embodiment, the washing machine further includes an inner drum locking device used for locking the inner drum to be located at a determined position, and the inner drum door triggering piece is arranged corresponding to the position of the through channel where the inner drum is located in a state that the inner drum is locked by the inner drum locking device.

As an implementation mode of the embodiment, the door opening mechanism includes a linkage assembly, wherein the linkage assembly is in linkage connection with the housing door and the inner drum door, and the trigger piece triggers the linkage assembly to drive the housing door and the inner drum door to be subjected to sequential linkage unlocking/locking.

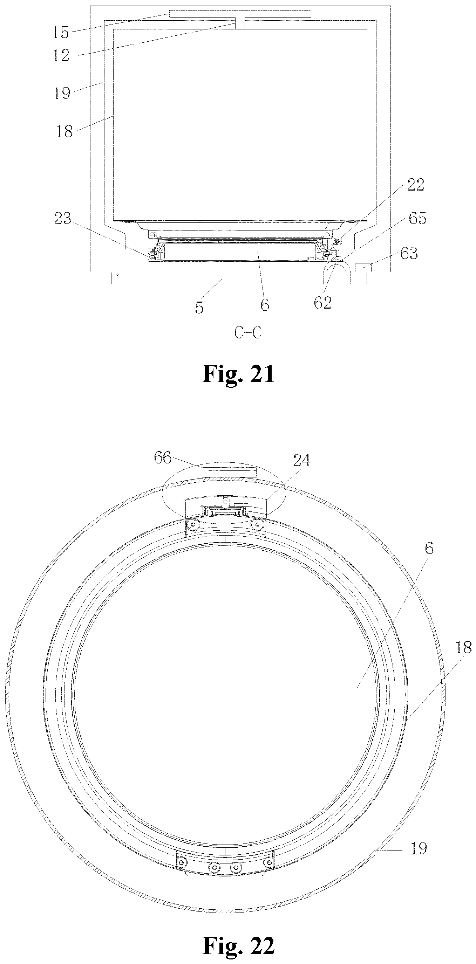

As shown in Fig. 22 to Fig. 24, in the embodiment, a washing machine includes:
an inner drum 18, provided with a washing cavity for independently containing washing water;
an inner drum door 6, mounted at an opening of the inner drum 18 in an openable and closable mode;
an inner drum door lock, used for locking the inner drum door 6 to keep a closed state; and
a door lock detection device 66, used for detecting whether the inner drum door lock is locked or not.

The embodiment discloses a drum washing machine with a holeless inner drum and a front-opening structure, the inner drum 18 is a holeless structure. It can be known from the structural characteristics of the drum washing machine with the holeless inner drum that in the washing and rinsing process, the key of forming the inner cavity of the inner drum capable of independently containing washing water is to maintain the sealing performance of the inner drum door. Furthermore, in the process of the high-speed rotation of the inner drum for dewatering, if the inner drum door is not locked or is not locked in place, serious safety accidents may be caused. According to the washing machine in the embodiment, the door lock detection device is adopted to detect the inner drum door lock, and whether the inner drum door lock is locked or not is directly related to whether the inner drum door is locked in place, so that the door lock detection device 66 can more directly detect the state of the inner drum door, and the situation that the inner drum door is not locked in place is fundamentally eradicated.

Further, in the embodiment, the inner drum door lock includes a latch tongue 30 mounted on the inner drum door 6 and a lock bracket 24 mounted on the opening of the inner drum 18. The washing machine includes an outer drum 19 coaxially arranged outside the inner drum 18, and the door lock detection device 66 is arranged on the outer drum 19 and used for detecting whether the latch tongue 30 is locked in a lock bracket 24 or not.

In the embodiment, according to a specific structure of the inner drum door lock, the door lock detection device directly detects whether the latch tongue 30 of the inner drum door lock is locked in the lock bracket 24 or not, so that whether the inner drum door 6 is locked or not can be accurately judged, the in-place locking accuracy of the inner drum door is greatly improved, and potential safety hazards caused by not-in-place locking are avoided.

Further, due to the fact that a displacement difference of the latch tongue 30 of the inner drum door in the locking state and the unlocking state is small, the higher requirement is required for the detection precision of the door lock detection device if the action of the latch tongue needs to be accurately detected, but the cost of the door lock detection device is certainly increased. According to the washing machine in the embodiment, the detection accuracy of the door lock detection device is improved. In order to reduce the cost of the door lock detection device as much as possible and ensure the detection precision, the washing machine further includes a door lock triggering device, and the door lock triggering device is in linkage with the latch tongue 30 to enter a detection range of the door lock detection device 66 in the locking process of the inner drum door lock.

In the embodiment, the door lock triggering device is arranged and is in linkage with the latch tongue when the inner drum door lock is locked, the door lock triggering device can amplify the displacement of the latch tongue when the inner drum door lock is locked, the displacement can be more easily detected by the door lock detection device 66, and thus, the detection accuracy is ensured.

As an implementation mode of the embodiment, in the embodiment, the door lock triggering device includes a movable piece 68 that can move in a reciprocating manner, and an elastic piece 70 that is arranged between the movable piece 68 and the lock bracket 24; an induction piece 67 which can be detected by the door lock detection device 66 is arranged on the movable piece 68; the movable piece 68 is in linkage with the latch tongue 30 in the locking process of the inner drum door lock, and the door lock detection device 66 generates a detection signal after detecting the induction part 67 entering the detection range.

In the embodiment, the movable piece 68 of the door lock triggering device is in linkage along with the latch tongue when the inner drum door lock is locked, the small displacement of the latch tongue can be amplified, or the displacement position of the latch tongue is extended to be within the detection range of the door lock detection device 66, and therefore, the locking state of the inner drum door lock can be accurately detected.

According to the door lock triggering device, in the locking process of the inner drum door lock, the movable piece and the latch tongue are in linkage to compress the elastic piece 70, the elastic piece 70 elastically deforms, when the inner drum door lock is unlocked, the movable piece is not resisted by the latch tongue 30 anymore, and the elastic piece 70 recovers deformation to push the movable piece 68 to reset so as to detect the next locking process.

Further, the lock bracket 24 includes a bracket body and a locking piece arranged in the bracket body, one end of the elastic piece 70 is fixed in the bracket body, the other end of the elastic piece 70 is connected with the movable piece 68 and extends to the locking piece, and the latch tongue 30 is locked in the locking piece and abuts against the movable piece 68 to push the movable piece 68 to move into the detection range of the door lock detection device 66.

In the embodiment, an opening is formed in the locking piece, and at least part of the movable piece 68 extends into the locking piece from the opening under the action of the elastic piece 70.

The door lock triggering device includes a limiting piece 69 that is arranged on the movable piece and used for preventing the movable piece 68 from being disengaged from the interior of the lock bracket.

Preferably, the limiting piece 69 is a limiting bulge arranged on the movable piece 68, one end of the movable piece 68 extends into the locking piece through the opening, and the other end of the movable piece 68 is limited outside the opening by the limiting bulge.

As an implementation mode of the embodiment, the induction piece 67 is a permanent magnet, and the door lock detection device 66 includes a magnetic induction element capable of inducing the permanent magnet; and preferably, the permanent magnet is a magnet, and the magnetic induction element is a reed switch.

In the embodiment, an inducing distance range of the reed switch is L.

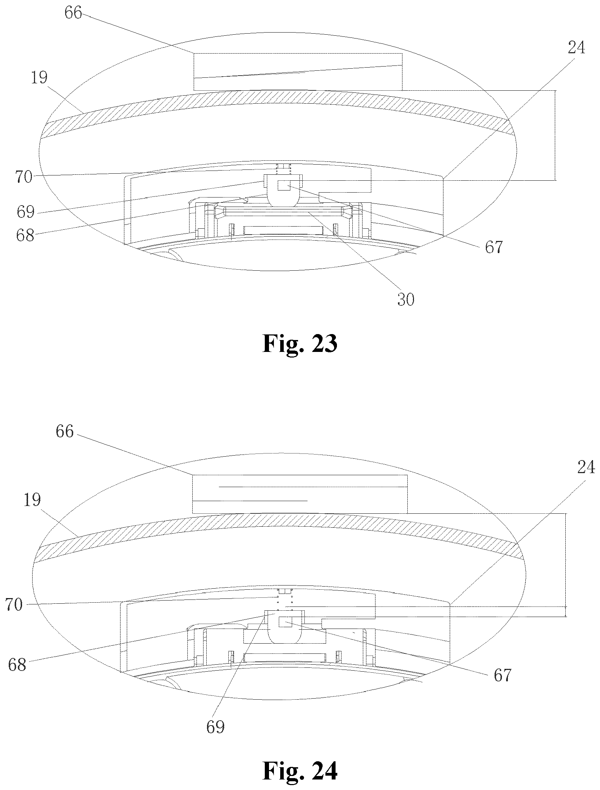

As shown in Fig. 23, in the embodiment, the inner drum door 6 is locked in place, the latch tongue 30 is in place, the latch tongue 30 presses the movable piece 68 and the magnet to a direction of the outer drum wall, the distance between the magnet and the reed switch is H which is smaller than or equal to L or is smaller than L. The reed switch is pulled in to be conductive, and thus it is judged that the door body is locked in place.

As shown in Fig. 24, when the inner drum door 6 is not locked in place or opened and the latch tongue 30 is not in place, the elastic piece 70 presses the movable piece 68 towards a direction away from the outer drum wall, the distance between the magnet and the reed switch is H + h, which is larger than L. The reed switch is not pulled in to be separated, and thus it is judged that the door body is not locked in place.

The above description is only preferred embodiments of the present invention, and is not intended to limit the present invention. Although the present invention has been disclosed in the preferred embodiments, any technician can make some changes or modifications within the scope of the appended claims.

## Claims

1. A washing machine comprising:
an inner drum (18), provided with a washing cavity for independently containing washing water;
an inner drum door (6), mounted at an opening of the inner drum (18) in an openable and closable mode;
**characterized in that,**
the inner drum door (6) comprises a door body inner shell (603), a door body outer shell (601) and a door body lining (604); and
the door body lining (604) is clamped and fixed between the door body inner shell (603) and the door body outer shell (601);
the door body lining (604) comprises a blocking part that is matched with the opening of the inner drum (18) in shape and a connecting part (615) that is located at a periphery of the blocking part, and the connecting part (615) is clamped and fixed between the door body inner shell (603) and the door body outer shell (601);
the blocking part comprises a blocking face (613) and a transition wall (614) that extends from a periphery of the blocking face (613) in an axial direction of the inner drum (18), and the connecting part (615) is an annular connecting wall formed by outward flanging of a periphery of the transition wall (614);
the inner drum door (6) comprises a sealing element (605) mounted on the periphery of the blocking part;
a mounting space used for clamping and fixing one end of the sealing element (605) is formed between the peripheral wall of the inner side of the inner shell body of the door body inner shell (603) and the transition wall (614) of the door body lining (604), and the periphery of the blocking face (613) of the door body lining (604) extends outwards in a radial direction to form a stop ring (609); and the other end of the sealing element (605) abuts against the stop ring (609), and at least one layer of sealing band (608) is arranged between two ends of the sealing element (605).

2. The washing machine according to claim 1, **characterized in that** the door body inner shell (603) comprises an annular inner shell body, an inner shell connecting part (615) and an inner shell extrusion part (611) that are arranged on the inner shell body; the door body outer shell (601) comprises an annular outer shell body, an outer shell connecting part (615) and an outer shell extrusion part (612) that are arranged on the outer shell body; and
the inner shell connecting part (615) and the outer shell connecting part (615) are fixedly connected through a connecting piece, and the connecting part (615) of the door body lining (604) is clamped and fixed by the inner shell extrusion part (611) and the outer shell extrusion part (612).

3. The washing machine according to claim 2, **characterized in that** the door body outer shell (601) comprises an outer shell supporting part (610) arranged on the outer shell body, and the supporting part (610) extends to the blocking part in the axial direction of the inner drum (18) to conduct extrusion support.

4. The washing machine according to claim 3, **characterized in that** the supporting part (610) extends to the blocking face (613) and/or to the transition wall (614) in the axial direction of the inner drum (18) to conduct extrusion support.

5. The washing machine according to any one of claims 2 to 4, **characterized in that** the outer shell body is provided with an annular groove, a peripheral wall of an inner side of the inner shell body and a peripheral wall of an inner side of the annular groove are spaced, the inner shell extrusion part (611) is an inner shell bulge arranged on the peripheral wall of the inner side of the inner shell body, and the connecting part (615) of the door body lining (604) extends into the annular groove of the outer shell body to be clamped and fixed between the inner shell bulge and a bottom wall of the annular groove.

6. The washing machine according to claim 5, **characterized in that** an outer shell bulge is arranged at a position, corresponding to the inner shell bulge, of the bottom wall of the annular groove, and the connecting part (615) of the door body lining (604) extends into the annular groove of the outer shell body to be clamped and fixed between the inner shell bulge and the outer shell bulge.

7. The washing machine according to claim 5 or 6, **characterized in that** the supporting part (610) is a supporting wall formed by extending from the peripheral wall of the inner side of the annular groove to the transition wall (614) in the axial direction of the inner drum (18).

8. The washing machine according to one of claims 1 to 7, **characterized in that** an annular mounting groove is formed in the inner shell body, a mounting hole (602) is formed in the annular mounting groove, and the connecting piece penetrates through the mounting hole (602) to be fixedly connected with the outer shell body; and the sealing element (605) comprises a decoration part (607), and the decoration part (607) extends above the mounting groove and covers an opening of the mounting groove.

## Patentansprüche

1. Waschmaschine, umfassend:
eine innere Trommel (18), die mit einem Waschhohlraum zur unabhängigen Aufnahme von Waschwasser versehen ist;
eine Tür (6) der inneren Trommel, die an einer Öffnung der inneren Trommel (18) in öffenbarer und schließbarer Weise angebracht ist;
**dadurch gekennzeichnet, dass**
die Tür (6) der inneren Trommel eine Türkörperinnenschale (603), eine Türkörperaußenschale (601) und ein Türkörperfutter (604) umfasst; und
das Türkörperfutter (604) zwischen der Türkörperinnenschale (603) und der Türkörperaußenschale (601) eingeklemmt und befestigt ist;
das Türkörperfutter (604) einen Sperrteil, der in der Form an die Öffnung der inneren Trommel (18) angepasst ist, und einen Verbindungsteil (615), der an einem Umfang des Sperrteils angeordnet ist, umfasst, und der Verbindungsteil (615) zwischen der Türkörperinnenschale (603) und der Türkörperaußenschale (601) eingeklemmt und befestigt ist;
der Sperrteil eine Sperrfläche (613) und eine Übergangswand (614) umfasst, die sich von einem Umfang der Sperrfläche (613) in einer axialen Richtung der inneren Trommel (18) erstreckt, und der Verbindungsteil (615) eine ringförmige Verbindungswand ist, die durch eine nach außen gerichtete Flanschbildung eines Umfangs der Übergangswand (614) gebildet wird;
die Tür (6) der inneren Trommel ein Dichtungselement (605) umfasst, das am Umfang des Sperrteils angebracht ist;
zwischen der Umfangswand der Innenseite des Innenschalenkörpers der Türkörperinnenschale (603) und der Übergangswand (614) des Türkörperfutters (604) ein Einbauraum zum Einspannen und Befestigen des einen Endes des Dichtungselements (605) ausgebildet ist und der Umfang der Sperrfläche (613) des Türkörperfutters (604) sich in radialer Richtung nach außen erstreckt, um einen Anschlagring (609) zu bilden; und das andere Ende des Dichtungselements (605) an dem Anschlagring (609) anliegt, und mindestens eine Lage Dichtungsband (608) zwischen zwei Enden des Dichtungselements (605) angeordnet ist.

2. Waschmaschine nach Anspruch 1, **dadurch gekennzeichnet, dass** die Türkörperinnenschale (603) einen ringförmigen Innenschalenkörper, einen Innenschalenverbindungsteil (615) und einen Innenschalenextrusionsteil (611) umfasst, die an dem Innenschalenkörper angeordnet sind; die Türkörperaußenschale (601) einen ringförmigen Außenschalenkörper, einen Außenschalenverbindungsteil (615) und einen Außenschalenextrusionsteil (612) umfasst, die an dem Außenschalenkörper angeordnet sind; und
der Innenschalenverbindungsteil (615) und der Außenschalenverbindungsteil (615) durch ein Verbindungsstück fest verbunden sind, und der Verbindungsteil (615) des Türkörperfutters (604) durch den Innenschalenextrusionsteil (611) und den Außenschalenextrusionsteil (612) eingeklemmt und fixiert ist.

3. Waschmaschine nach Anspruch 2, **dadurch gekennzeichnet, dass** die Türkörperaußenschale (601) einen Außenschalenstützteil (610) umfasst, der am Außenschalenkörper angeordnet ist, und dass sich der Stützteil (610) in axialer Richtung der inneren Trommel (18) zum Sperrteil erstreckt, um eine Extrusionsunterstützung zu leisten.

4. Waschmaschine nach Anspruch 3, **dadurch gekennzeichnet, dass** sich der Stützteil (610) bis zur Sperrfläche (613) und/oder bis zur Übergangswand (614) in axialer Richtung der inneren Trommel (18) erstreckt, um eine Extrusionsunterstützung zu leisten.

5. Waschmaschine nach einem der Ansprüche 2 bis 4, **dadurch gekennzeichnet, dass** der Außenschalenkörper mit einer Ringnut versehen ist, eine Umfangswand einer Innenseite des Innenschalenkörpers und eine Umfangswand einer Innenseite der Ringnut beabstandet sind, der Innenschalenextrusionsteil (611) ein Innenschalenwulst ist, der an der Umfangswand der Innenseite des Innenschalenkörpers angeordnet ist, und der Verbindungsteil (615) des Türkörperfutters (604) sich in die Ringnut des Außenschalenkörpers erstreckt, um zwischen dem Innenschalenwulst und einer Bodenwand der Ringnut eingeklemmt und befestigt zu sein.

6. Waschmaschine nach Anspruch 5, **dadurch gekennzeichnet, dass** ein Außenschalenwulst an einer mit dem Innenschalenwulst korrespondierenden Stelle der Bodenwand der Ringnut angeordnet ist und sich der Verbindungsteil (615) des Türkörperfutters (604) in die Ringnut des Außenschalenkörpers erstreckt, um zwischen dem Innenschalenwulst und dem Außenschalenwulst eingeklemmt und befestigt zu sein.

7. Waschmaschine nach Anspruch 5 oder 6, **dadurch gekennzeichnet, dass** der Stützteil (610) eine Stützwand ist, die dadurch gebildet wird, dass sie sich von der Umfangswand der Innenseite der Ringnut zur Übergangswand (614) in axialer Richtung der inneren Trommel (18) erstreckt.

8. Waschmaschine nach einem der Ansprüche 1 bis 7, **dadurch gekennzeichnet, dass** in dem Innenschalenkörper eine ringförmige Montagenut ausgebildet ist, dass in der ringförmigen Montagenut ein Montageloch (602) ausgebildet ist und dass das Verbindungsstück durch das Montageloch (602) hindurchragt, um fest mit dem Außenschalenkörper verbunden zu sein; und dass das Dichtungselement (605) einen Dekorationsteil (607) umfasst, wobei sich der Dekorationsteil (607) über die Montagenut erstreckt und eine Öffnung der Montagenut abdeckt.

## Revendications

1. Une machine à laver comprenant:
un tambour interne (18), pourvu d'une cavité de lavage destinée à contenir indépendamment de l'eau de lavage;
une porte de tambour interne (6), montée au niveau d'une ouverture du tambour interne (18) de manière à pouvoir s'ouvrir et se fermer;
**caractérisée en ce que,**
la porte du tambour interne (6) comprend une coque interne de corps de porte (603), une coque externe de corps de porte (601) et une doublure de corps de porte (604); et
la doublure du corps de porte (604) est serrée et fixée entre la coque interne du corps de porte (603) et la coque externe du corps de porte (601);
la doublure du corps de porte (604) comprend une partie de blocage qui est adaptée à la forme de l'ouverture du tambour interne (18) et une partie de liaison (615) qui est située à la périphérie de la partie de blocage, et la partie de liaison (615) est serrée et fixée entre la coque interne du corps de porte (603) et la coque externe du corps de porte (601);
la partie de blocage comprend une face de blocage (613) et une paroi de transition (614) qui s'étend à partir d'une périphérie de la face de blocage (613) dans une direction axiale du tambour interne (18), et la partie de liaison (615) est une paroi de liaison annulaire formée par bordage vers l'extérieur d'une périphérie de la paroi de transition (614);
la porte du tambour interne (6) comprend un élément d'étanchéité (605) monté sur la périphérie de la partie de blocage;
un espace de montage utilisé pour le serrage et la fixation d'une extrémité de l'élément d'étanchéité (605) est formé entre la paroi périphérique du côte intérieur du corps de coque interne de la coque interne du corps de porte (603) et la paroi de transition (614) de la doublure du corps de porte (604), et la périphérie de la face de blocage (613) de la doublure du corps de porte (604) s'étend vers l'extérieur dans une direction radiale pour former un anneau d'arrêt (609); et l'autre extrémité de l'élément d'étanchéité (605) vient en butée contre l'anneau d'arrêt (609), et au moins une couche de bande d'étanchéité (608) est disposée entre deux extrémités de l'élément d'étanchéité (605).

2. La machine à laver selon la revendication 1, **caractérisée en ce que** la coque interne du corps de porte (603) comprend un corps de coque interne annulaire, une partie de liaison de coque interne (615) et une partie d'extrusion de coque interne (611) qui sont disposées sur le corps de coque interne; la coque externe du corps de porte (601) comprend un corps de coque externe annulaire, une partie de liaison de coque externe (615) et une partie d'extrusion de coque externe (612) qui sont disposés sur le corps de coque externe; et
la partie de liaison de coque interne (615) et la partie de liaison de coque externe (615) sont reliées de manière fixé par l'intermédiaire d'une partie de liaison, et la partie de liaison (615) de la doublure du corps de porte (604) est serrée et fixée par la partie d'extrusion de coque interne (611) et la partie d'extrusion de coque externe (612).

3. La machine à laver selon la revendication 2, **caractérisée en ce que** la coque externe du corps de porte (601) comprend une partie de support de coque externe (610) disposée sur le corps de coque externe, et la partie de support (610) s'étend jusqu'à la partie de blocage dans la direction axiale du tambour interne (18) pour réaliser un support d'extrusion.

4. La machine à laver selon la revendication 3, **caractérisée en ce que** la partie de support (610) s'étend jusqu'à la face de blocage (613) et/ou jusqu'à la paroi de transition (614) dans la direction axiale du tambour interne (18) pour réaliser un support d'extrusion.

5. La machine à laver selon l'une quelconque des revendications 2 à 4, **caractérisée en ce que** le corps de coque externe est pourvu d'une rainure annulaire, une paroi périphérique d'un côté intérieur du corps de coque interne et une paroi périphérique d'un côté intérieur de la rainure annulaire sont espacées, la partie d'extrusion de coque interne (611) est un renflement de coque interne disposé sur la paroi périphérique du côté intérieur du corps de coque interne, et la partie de liaison (615) de la doublure du corps de porte (604) se prolonge dans la rainure annulaire du corps de coque externe pour être serrée et fixée entre le renflement de coque interne et une paroi inférieure de la rainure annulaire.

6. La machine à laver selon la revendication 5, **caractérisée en ce qu'**un renflement de coque externe est disposé à une position, correspondant au renflement de coque interne, de la paroi inférieure de la rainure annulaire, et la partie de liaison (615) de la doublure du corps de porte (604) se prolonge dans la rainure annulaire du corps de coque externe pour être serrée et fixée entre le renflement de coque interne et le renflement de coque externe.

7. La machine à laver selon la revendication 5 ou 6, **caractérisée en ce que** la partie de support (610) est une paroi de support formée en s'étendant depuis la paroi périphérique du côté intérieur de la rainure annulaire jusqu'à la paroi de transition (614) dans la direction axiale du tambour interne (18).

8. La machine à laver selon l'une des revendications 1 à 7, **caractérisée en ce qu'**une rainure de montage est formée dans le corps de coque interne, un trou de montage (602) est formé dans la rainure de montage annulaire, et la partie de liaison pénètre à travers le trou de montage (602) pour être reliée de manière fixe au corps de coque externe; et l'élément d'étanchéité (605) comprend une partie de décoration (607) et la partie de décoration (607) s'étend au-dessus de la rainure de montage et recouvre une ouverture de la rainure de montage.
